# EUROPEAN PATENT APPLICATION

(11) **EP 3 660 518 A1**
(43) Date of publication of application: **03.06.2020**
(21) Application number: 18209484.7
(22) Date of filing: 30.11.2018
(51) Int. Cl.: G01N 35/04

(54) **DEVICE FOR DECAPPING**

(71) Applicant: Roche Diagnostics GmbH, 68305 Mannheim (DE); F. Hoffmann-La Roche AG, 4070 Basel (CH)
(72) Inventor: CHERUBINI, Claudio, CH-6343 Rotkreuz (CH); GUTMANN, Olivier, CH-6343 Rotkreuz (CH)
(74) Representative: Schwarz, Ralf

(57) **Abstract**

There is described a device for removing caps from a laboratory sample container.

The device comprises a set of grippers for gripping the cap in a closed position and a drive for moving the set of grippers so that a cap is removable from the laboratory sample container. A first cap guiding element and a second cap guiding element are placed on opposite sides of the gripping end portions of the set of grippers. The first and second guiding elements comprise segments which are aligned with and as wide as the gripping portions of the set of grippers.

## Description

### Technical field

Embodiments of the invention relates to a device for gripping caps from laboratory sample containers used in a device for removing caps of laboratory sample containers and a device for removing caps of laboratory sample containers known as a decapper.

### Related art

Devices to remove caps form laboratory sample containers are well known in the art. Decappers are also known in the art.

EP 3236267 discloses a decapper for removing a cap from a laboratory sample container. The decapper comprises a guidance.

The general functionalities how to remove a cap form the container are described, e.g. with respect to Fig. 1 in EP 3236267 which is herewith incorporated by reference in its entirety.

EP 1659091 discloses a device for removing caps from test tubes. A first set of gripper grips a tube and a second set of grippers grips a cap. A drive rotates and/or translates the first set of grippers relative to the second set of grippers. This describes the general functionality of a decapper.

In the following it is focused on the inventive arrangement of the cap gripping part.

### Summary

An object of the invention is to improve the reliability and security of devices for removing a variety of caps.

This is realized by a device according to claim 1 and a decapper according to claim 10.

A first aspect of the present invention concerns a device for gripping and releasing caps from a laboratory sample container. The device comprises a set of grippers for gripping the cap in a closed position and a drive for moving the set of grippers so that a cap is removable from the laboratory sample container. A first cap guiding element and a second cap guiding element are placed on opposite sides of the gripping end portions of the set of grippers in the closed position. The first and second cap guiding elements comprises segments which are coaxial aligned with the gripping portions of the set of grippers.

In particular, the cap guiding element segments at least cover the same width projected in a plane perpendicular to the axis of coaxial alignment as the gripping portions of the gripper.

Coaxial aligned means herewith that a center point of the segments, e.g. the center of a ring, and gripping portions are aligned along one axis with accuracy of at least 1mm or less.

A set of gripper means in the embodiments of the invention any gripper design with, e.g. 2, 3 or 4 gripper parts which are movable against each other to grip a cap. The movement is translatory or rotational or a combination thereof. Sometimes all gripper parts are moved sometimes some parts are fixed.
Usually for decapping devices, the gripper comprises some kind of structure of the gripping portions, i.e. on the surface getting into contact with the cap to get good fixation of the cap to the set of grippers. These structures can be a dedicated roughness, some kind of form which fits to the used caps or even a blade and/or spike which penetrates into the caps.

A further aspect of the inventive device is that a surfaces of the first and second cap guiding elements facing each other have a distance between 1,7mm and 10mm, in particular between 5 and 8 mm more particular between 6.5 mm and 7.5 mm, most particular 7 mm.

Another aspect of the invention is that a fixation element of the second cap guiding element forms a third cap guiding element on the side of the gripper end portions of the first cap guiding element.

A further aspect of the inventive device is a that the fixation element and the second cap guiding element are connected with at least one distance element arranged in a recess of the set of grippers in the closed position.

Another aspect of the invention is that the cap guiding elements are annular segments or cut outs, preferable rings.

A further aspect of the invention is that the inner diameter (C) of the second cap guiding element is bigger than the inner diameter of the first cap guiding element (16) and/or the inner diameter (C) of the second cap guiding element is bigger than the diameter spanned by the gripping part of the set of grippers in the closed position.

A further aspect of the inventive device is that the guiding elements of the second cap guiding element span an inner diameter between 25 mm and 20 mm in particular of 21 mm.

Another aspect of the invention is that the guiding elements of the third cap guiding element span an inner diameter between 25 mm and 19 mm in particular 20 mm.

A further aspect of the inventive device is that a distance between the facing surfaces of the second cap guiding element and the set of grippers in the closed position is between 0.5 and 1.5 mm in particular 1 mm.

However, other embodiments are feasible which relates to a combination of features disclosed herewith.

### Short description of the Figures

Further optional features and embodiments of the invention will be disclosed in more detail in the subsequent description of preferred embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
Fig. 1 is a schematic side view of an embodiment of a device for removing caps after the cap is removed from the laboratory sample container;
Fig. 2 is a schematic view of the embodiment shown in Fig. 1 releasing the cap in an open position of the set of grippers. so that the cap falls into a waste bin;
Fig. 3 shows a side view of an embodiment of a fixation element with the second guidance element;
Fig. 4 shows a top view of the embodiment shown in Fig. 3;
Fig. 5 shows a top view of an embodiment of the second guidance element as shown in Fig. 3;
Fig. 6 shows a front view of an embodiment for a device for gripping caps with the elements shown in Fig. 3-5; and
Fig. 7 shows a bottom view of the embodiment shown in Fig. 6.

### Detailed description of the embodiments

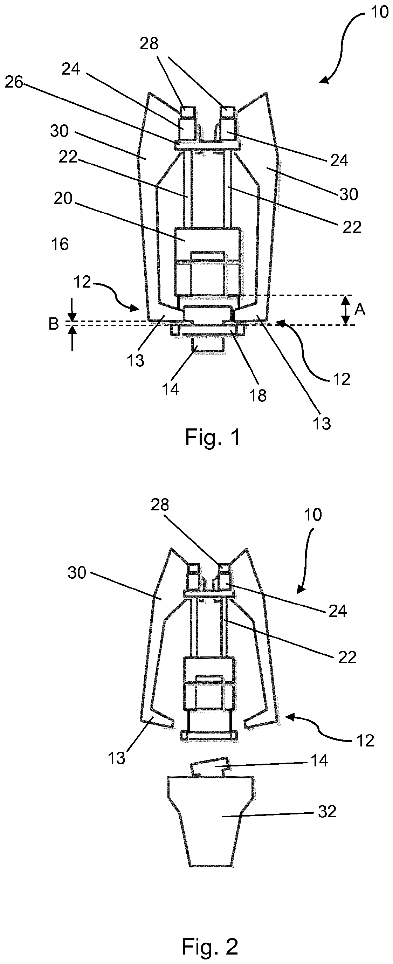

Figures 1 show a schematic side view of an embodiment of a device for gripping and releasing caps 10.
A set of grippers 12 is arranged at legs 30 which are rotatable around a pivot point in space, so that the set of grippers 12 can move between a closed position shown in Fig. 1 gripping a cap 14 and an open position shown in Fig. 2. Details of the drive mechanism are described with respect to Fig. 1 in EP 3236267.

The set of grippers comprise end portions 13 arranged in principle horizontally in the closed position of the set of grippers. These end portions 13 comprises vertical end surfaces to grip the cap 14.

A first cap guiding element 16 is arranged between the legs 30. This first cap guiding element 16 can receive elongated parts of special caps not shown in Fig. 1. On the side of the first cap guiding element away from the set of grippers 12 a cap push element 20 is arranged. The first guide element 16 and the cap push element are fixed on distance bars 22. The distance bars 22 are arranged in through-boring of a plate 26 fixed with stopper elements 28 so that the distance bars 22 are movable arranged in the plate. The plate 26 is fixed relative to the set of grippers 12. The first cap guiding element 16 is fixed to the distance bars 22. The cap push element 20 is arranged movable along the distance bars 22. This allows for a vertical movement of the first cap guiding element 16 together with the cap push element 20 as well as a relative vertical movement of the cap push element 20 with respect to the first cap guiding element 16.

More details of the arrangement and functionalities as well as dimensions of the first cap guiding element 16 and the cap push element 20 are described in the specification of EP 3236267.

On the other side of the set of grippers 12 in closed position a second cap guiding element 18 is arranged in a vertical distance B to the set of grippers 12 in closed position. The distance B between the facing surfaces of the second cap guiding element 18 and the set of grippers 12 in closed position is 1mm in the embodiment shown. In further embodiments other distance in the range between 0.5 an 2mm are also possible.

Between the stopper elements 28 and the plate 26 spacer elements 24 can be arranged. This allows to adjust the minimum distance A of the facing surfaces of the first cap guiding element 16 and the second cap guiding element 18. This distance A can be in the range between 1,7mm and 10mm, in particular between 5 and 8 mm more particular between 6.5 mm and 7.5 mm, most particular 7 mm. In the embodiment shown this distance A is 7mm.

In another embodiment not shown the distance bars have the appropriate length to realize the distance A in the range between 5 and 8mm so the spacer elements are obsolete in these embodiments.

Fig. 2 shows the embodiment shown in Fig. 1 the device for gripping caps 10 schematically in the open position of the set of grippers 12.
After gripping the cap 14 and removing it from a laboratory sample container the cap 14 is released from the set of grippers 12 and falls into a waste bin 32. The arrangement of the first and second cap guiding elements 16, 18 allows for a secure and reliable falling of a great variety of caps 14 usually used in a laboratory environment vertically into the waste bin 32.

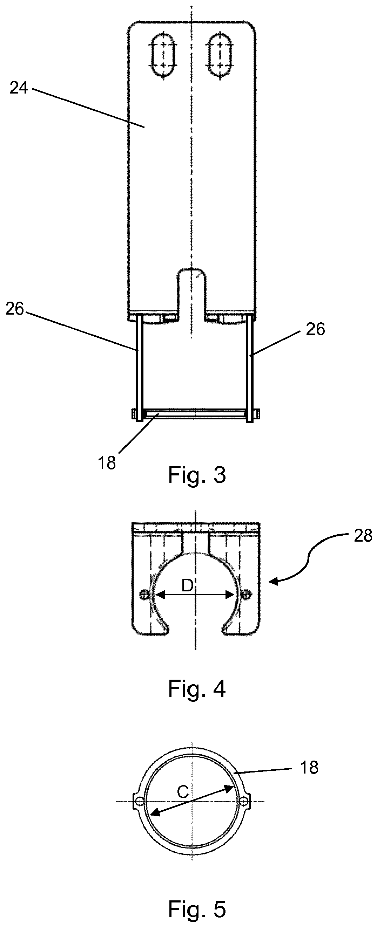

Fig. 3 shows an embodiment of a fixation element 24 together with an embodiment of the second cap guiding element 18 for a further embodiment of the invention. The fixation element 24 is formed as an L-shaped metal sheet. Two distance elements 26 are fixed in the base of the L to fix the second cap guiding element 18 in a fixed vertical distance. The second cap guiding element 18 has respective seats so the distance elements can be fixed. The distance elements 26 can be realized, e.g. as bolts, screws or grub screw.

Fig. 4 shows a top view of the fixation element 24 shown in Fig. 3. The base of the L-shaped fixation element 24 comprises a recess which forms a third cap guiding element. The recess has the shape of an open circle which spans an inner diameter D between 18 and 22 mm in particular of 20 mm.

Fig. 5 shows a top view of the embodiment of the second cap guiding element 18 formed as a ring. The ring has an inner diameter C between 19 and 23 mm in particular of 21 mm.

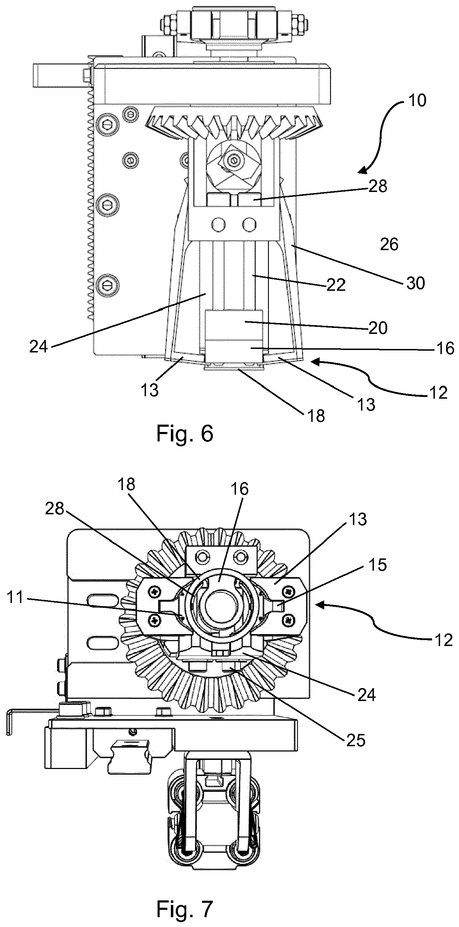

Fig. 6 shows a front view of an embodiment of the device 10 for gripping and releasing caps with the element shown in Fig. 3-5. The fixation sheet 24 is fixed to a seat of the legs 30 of the set of grippers 12. The set of grippers are positioned in a slightly open position. The spacers 24 are not included in the embodiment shown in Fig. 6. The distance elements 26 fix the second cap guiding element 18 to the fixation element 24.

The set of grippers comprise a U-shaped recess so that the distance elements 26 do not prohibit that the set of grippers 12 to be movable to the closed position to grip a cap.

The first cap guiding element 16 and the cap push element 20 can be equally designed to the embodiment shown in Figs. 1 and 2 as described in EP 3236267. In the embodiment shown in Fig. 6 the distance bars 22 are arranged in front of the legs 30 and not in-between them. Nevertheless, the first cap guiding element 16 and the cap push element 20 protrudes in-between the legs 30 as can be best seen in Fig. 7 to fulfill its functionality. The base of the L-shaped fixation element 24 is placed on the same side of the set of grippers 12 in the closed position as the first cap guiding element 16.

Fig. 7 shows a bottom view of the embodiment shown in Fig. 6. The set of grippers 12 and the first, second and third cap guiding element 16, 18, 28 are arranged in one rotatable sub assembly, so that caps with a thread screwed on a laboratory sample container can easily be removed.

In this view the pairs of slides 11 of the set of grippers 12 which will penetrate into the cap 14 can be seen. The slides protrude out of the end surfaces of the end portions 13 of the set of grippers 12 which are arranged to get into contact with the cap.

The fixation element 24 is fixed with screws 25 in the plate 26 on the opposite side of the through-holes for the distance bars 22.

The first second and/or third cap guiding elements 16, 18, 28 and the set of grippers 12 are arranged along a central axis, so that a laboratory sample container can be aligned to this axis and the cap 14 of this laboratory sample container can be fed at least through the second cap guiding element 18 and the set of grippers 12.

The inner diameters of the second cap guiding element C is bigger than the inner diameter D of the third cap guiding element 28 which is bigger than an inner diameter of the first cap guiding element 16.

The end portions 13 of the set of grippers 12 comprise a recess 15 so that the open and closure of the set of grippers 12 is not disturbed by the distance elements 26.

Other arrangements of the set of grippers 12 and the first and second cap guiding elements are also possible. For instance, the distance elements 26 can be placed so that other geometries of the end portions 13 of the set of grippers 12 are possible.

In a further not shown embodiment the fixation element 24 is longer and directly forms the second cap guiding element as is formed the third cap guiding element in the embodiment shown in Fig. 3 and 4.

## Claims

1. A device (10) for removing caps from a laboratory sample container,
the device comprises
a set of grippers (12) for gripping the cap in a closed position and a drive for moving the set of grippers so that a cap is removable from the laboratory sample container, wherein a first cap guiding element (16) and a second cap guiding element (18) are placed on opposite sides of the gripping end portions (13) of the set of grippers (12), wherein the first and second cap guiding elements (16), (18) comprises segments which are coaxial aligned with the gripping portions of the set of grippers (12).

2. The device (10) according to the preceding claim wherein the surfaces of the first and second cap guiding elements (16) (18) facing each other have a distance (A) between 1,7mm and 10mm, in particular between 5 and 8 mm more particular between 6.5 mm and 7.5 mm, most particular 7 mm.

3. The device (10) according to any of the preceding claims wherein a fixation element of the second cap guiding element forms a third cap guiding element on the side of the gripper end portions of the first cap guiding element.

4. The device (10) according to the preceding claim wherein the fixation element (24) and the second cap guiding element (18) are connected with at least one distance element (26) arranged in a recess (15) of the set of grippers (12) in the closed position.

5. The device (10) according to any of the preceding claims, wherein the first and second cap guiding elements (16) (18) are annular segments, preferable rings.

6. The device (10) according to the preceding claim, wherein the inner diameter (C) of the second cap guiding element is bigger than the inner diameter of the first cap guiding element (16).

7. The device (10) according to the two preceding claims wherein the guiding elements of the second cap guiding element (18) span an inner diameter (C) between 25 mm and 20 mm in particular of 21 mm.

8. The device according to the three preceding claims wherein the guiding elements of the third cap guiding element span an inner diameter (D) between 25 mm and 19 mm in particular 20 mm.

9. The device according to any of the preceding claims wherein a distance (B) between the facing surfaces of the second cap guiding element and the set of grippers in the closed position is between 0.5 and 1.5 mm in particular 1 mm.

10. A decapper for removing caps of a laboratory sample container comprising a device as in any of the preceding claims.
